Europäisches Patentamt

European Patent Office

Office européen des brevets

(11) Veröffentlichungsnummer: **0 476 237 A1**

## (12) EUROPÄISCHE PATENTANMELDUNG

(21) Anmeldenummer: **91110134.3**

(22) Anmeldetag: **20.06.91**

(51) Int. Cl.⁵: **B60B 33/02**

(30) Priorität: **15.09.90 DE 4029299**

(43) Veröffentlichungstag der Anmeldung:
**25.03.92 Patentblatt 92/13**

(84) Benannte Vertragsstaaten:
**ES FR GB IT**

(71) Anmelder: **Albert Schulte Söhne GmbH. & Co.**
**Remscheider Strasse 25**
**W-5632 Wermelskirchen(DE)**

(72) Erfinder: **Die Erfinder haben auf ihre**
**Nennung verzichtet**

(74) Vertreter: **Buse, Karl Georg, Dipl.-Phys. et al**
**Patentanwälte Dipl.-Phys. Buse Dipl.-Phys.**
**Mentzel Dipl.-Ing. Ludewig Unterdörnen 114**
**W-5600 Wuppertal 2(DE)**

(54) **Feststellbare Lenkrolle für verfahrbare Geräte.**

(57) Die feststellbare Lenkrolle weist eine das Laufrad lagernde Radgabel (10) auf, deren Gabelrücken (11) über eine Kugellaufschale (27) und Kugelkränze (18,19) an einem mit dem Gerät verbindbaren Schwenklagerkopf abgestützt ist. Der Gabelrücken (11), die Kugellaufschale (27) und der Schwenklagerkopf ist zentral von einem axial verschiebbaren, im Lösesinne federbeaufschlagten Stellbolzen (16) durchsetzt, welcher der Sperrung und Freigabe einer Bremsschwinge (12) des Laufrades sowie der Sperrung und Freigabe eines Sperrgliedes (31) für die Schwenkbewegung der Radgabel (10) dient.

Zur Verringerung der Bauteile und Montagevereinfachung ist am Gabelrücken (11) eine etwa zur Achse des Laufrades weisende Zunge (32) angeordnet, auf welche die am Stellbolzen (16) anliegende, aus einer Federlasche gebildete Bremsschwinge (12) aufgesteckt und von einem ebenfalls auf die Zunge (32) aufgesteckten Klemmglied (34) in Befestigungslage gehalten ist.

FIG. 1

Die Erfindung betrifft eine feststellbare Lenkrolle für verfahrbare Geräte, mit einer das Laufrad lagernden Radgabel, deren Gabelrücken über eine Kugellaufschale und Kugellaufschale und Kugelkränze an einem mit dem Gerät verbindbaren Schwenklagerkopf abgestützt ist, wobei der Gabelrücken, die Kugellaufschale und der Schwenklagerkopf zentral von einem axial verschiebbaren, im Lösesinne federbeaufschlagten Stellbolzen zur Sperrung und Freigabe einer Bremsschwinge des Laufrades sowie zur Sperrung und Freigabe eines Sperrgliedes für die Schwenkbewegung der Radgabel durchsetzt ist.

Bei einer beispielsweise aus der DE-PS 3 031 345 bekannten Lenkrolle der eingangs genannten Art ist in der Höhlung der Radgabel eine als Blattfeder ausgebildete Bremsschwinge angeordnet, die von einem Stellbolzen gegen die Lauffläche des Laufrades angedrückt werden kann. Dabei ist die als Blattfeder ausgebildete Bremsschwinge aufgrund ihrer Federeigenschaften ständig bemüht, den Stellbolzen im Lösesinne von der Lauffläche des Laufrades weg nach oben zu drücken. Außerdem ist durch den Stellbolzen ein der Unterbrechung der Schwenkbewegung dienendes, federbeaufschlagtes Sperrglied in und außer Sperrwirkung bringbar. Die am Unterende des Stellbolzens anliegende Bremsschwinge ist mit dem Gabelrücken verschraubt. Diese Schraubverbindung einerseits und auch der Mechanismus zur Sperrung und Freigabe der Schwenkbewegung der Radgabel andererseits stellen sowohl hinsichtlich der Anzahl und der Fertigung der Bauteile, insbesondere aber im Hinblick auf die Montage einen beträchtlichen Aufwand dar.

Die Aufgabe der vorliegenden Erfindung besteht darin, einerseits den Bauteilaufwand und andererseits den Montageaufwand zu vermindern. Diese Aufgabe ist erfindungsgemäß dadurch gelöst, daß am Gabelrücken eine etwa zur Achse des Laufrades weisende Zunge angeordnet ist, auf welche die am Stellbolzen anliegende, aus einer Federlasche gebildete Bremsschwinge aufgesteckt und von einem ebenfalls auf die Zunge aufgesteckten Klemmglied in Befestigungslage gehalten ist. Abgesehen davon, daß nur ein einziges Befestigungsglied zur Festlegung der Bremsschwinge am Gabelrücken erforderlich ist, läßt sich auch deren Montage durch einfaches Aufstecken des Klemmgliedes herbeiführen, wobei insbesondere diese Montageart geeignet ist, in einen automatisierten Montageablauf integriert zu werden. Dabei ist die Zunge vorteilhaft einstückiger Bestandteil des Gabelrückens und ist durch eine zwischen zwei Einschnitten angeordnete, im rechten Winkel nach unten weisende Abwinklung gebildet, während das Klemmglied vorzugsweise aus einer Blattfeder mit im ungespannten Zustand konvexer Krümmung besteht, die einen die Zunge straff umschlleßenden Ausschnitt aufweist.

Zur Abstützung der Bremsschwinge in deren Befestigungsbereich ist das Klemmglied vorteilhaft mit die Bremsschwinge zu Beginn ihres sich an den horizontalen Befestigungsabschnitt anschließenden Neigungsabschnitt bereichsweise übergreifenden Stützfingern versehen.

Um auf ein separates Federglied zur Stützung des die Schwenkbewegung der Radgabel freigebenden bzw. festlegenden Sperrgliedes verzichten zu können, und stattdessen dafür die Bremsschwinge zu benutzen, ist nach einem weiteren Ausgestaltungsmerkmal der Erfindung das Sperrglied für die Schwenkbewegung der Radgabel unterhalb des Gabelrückens angeordnet, wobei das Sperrglied von einer an der Zunge des Gabelrückens ebenfalls angeklemmten Federlasche in Anlage am Gabelrücken gehalten ist. Dabei ist das vorteilhaft als Scheibe ausgebildete Sperrglied undrehbar, aber in axialer Richtung ausweichbar, am Gabelrücken gehaltert und weist in seinem Zentrum eine mehreckige Ausnehmung zur drehfesten Aufnahme eines am Stellbolzen angeordneten Vierkantabschnittes auf. Dadurch läßt sich bei in Sperrbereitschaftslage befindlichem Sperrglied die Schwenkbewegung der Radgabel auf einen geringen Schwenkwinkel reduzieren, so daß nach in Sperrlage überführtem Stellbolzen bereits eine geringe Verschwenkung der Rollengabel gegenüber dem Schwenklagerkopf das Sperrglied am Stellbolzen drehfest verrasten läßt.

Eine definierte Auffindung der Loslage des Stellbolzens läßt sich erzielen, indem dessen Lösehub durch ein Unterhalb des Sperrgliedes am Stellbolzen festgelegtes Anschlagglied begrenzt ist, das sich bei Löselage am Sperrglied anlegt. Dabei mag als Anschlagglied eine am Stellbolzen aufgeschraubte Mutter Verwendung finden. Es ist allerdings auch möglich, statt einer Mutter einen am Stellbolzen festgelegten Sicherungsring zu verwenden.

Bei diesen Lösungen liegt die Anschlagstelle jedoch unterhalb des Radgabelrückens und kann nicht mit Sicherheit von Verunreinigungen freigehalten werden. Deshalb mag es vorteilhaft sein, wenn der Lösehub des Stellbolzens durch einen unterhalb der Befestigungsplatte des Schwenklagerkopfes am Stellbolzen angeordneten Anschlag begrenzt ist, der sich bei Löselage an der Befestigungsplatte anlegt. Dabei mag der Anschlag auf einfache Weise aus durch Abdrehen des oberen Teilbereiches des Vierkantabschnitts gebildeten Eckvorsprüngen bestehen, die sich unterhalb der auf den abgedrehten Teilbereich des Vierkantabschnitts passenden Ausnehmung der Befestigungsplatte in Löselage anlegen.

Die Erfindung ist in Ausführungsbeispielen auf der Zeichnung dargestellt, und wird nachfolgend näher erläutert. Es zeigen:

Fig. 1    die erfindungsgemäße Lenkrolle in einem Längsschnitt, deren Bremsmechanismus sich im gelösten Zustand befindet,

Fig. 2    den Bereich der Befestigung der Bremsschwinge an der Radgabel in einem Schnitt nach der Linie II - II von Fig. 1,

Fig. 3    eine halb im Schnitt und halb in Ansicht dargestellte Untersicht der Lenkrolle gemäß Fig. 1,

Fig. 4    ein weiteres Ausführungsbeispiel dar erfindungsgemäßen Lenkrolle in einer Schnittdarstellung analog Fig. 1,

Fig. 5    eine ebenfalls halb in Ansicht und halb im Schnitt dargestellte Untersicht der aus Fig. 4 ersichtlichen Lenkrolle,

Fig. 6    ein weiteres Ausführungsbeispiel der erfindungsgemäßen Lenkrolle in einer Schnittdarstellung analog den Fig. 1 und 4,

Fig. 7    den zentralen Bereich der zum Schwenklagerkopf gehörenden Befestigungsplatte in einer ausgebrochenen Draufsicht.

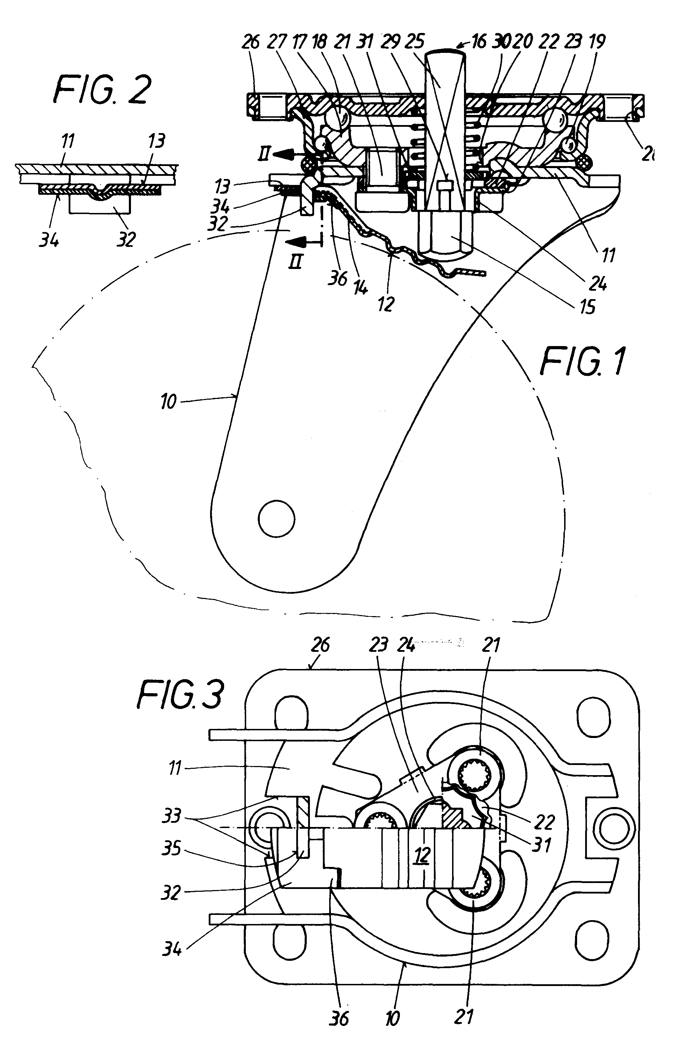

Jede der dargestellten Lenkrollen weist eine das Laufrad lagernde Radgabel 10 auf, an deren Gabelrücken 11 unterseitig eine Bremsschwinge 12 zur Feststellung des Laufrades angeordnet ist. Diese Bremsschwinge 12 ist aus einem vom Laufrad wegfedernden Stahlband gebildet, welches einen horizontalen Befestigungsabschnitt 13 und einen sich daran anschließenden Neigungsabschnitt 14 aufweist. Dieser Neigungsabschnitt 14 der Bremsschwinge 12 stützt sich an seinem freien Ende auf der Kugelkalotte einer Hutmutter 15 ab, die einstellbar auf das Unterende eines Stellbolzens 16 gesichert aufgeschraubt ist. Auf die Oberseite des Gabelrückens 11 ist eine topfförmige Kugellaufschale 17 aufgesetzt, an deren den Gabelrücken 11 überragendem Rand Laufringe zur Bildung von Kugelkränzen 18 und 19 angeformt sind. Im Zentrum dieser Kugellaufschale 17 und in dem darunterliegenden Gabelrücken 11 befindet sich eine Durchgangsbohrung 20 für den Stellbolzen 16. Im Topfboden der Kugellaufschale 17 sind auf einem konzentrisch zur Durchgangsbohrung 20 angeordneten Umfang drei Gewindelöscher vorhanden, in welche den Gabelrücken 11 an der Kugellaufschale 15 festlegende Befestigungsschrauben 21 eingedreht sind. Bei dem aus den Fig. 1 und 3 ersichtlichen Ausführungsbeispiel halternden die Befestigungsschrauben 21 unterhalb des Radgabelrückens außerdem eine dreieckige Formschlußplatte 22 sowie eine diese übergreifende Führungshaube 23, in deren Führungskragen 24 die Hutmutter 15 des Stellbolzens 16 bei ihrer Vertikalbewegung geführt ist. In seinem oberen Bereich ist der Stellbolzen 16 als Vierkantabschnitt 25 ausgebildet, der das Zentrum einer Befestigungsplatte 26 formschlüssig durchdringt und die Befestigungsplatte 26 nach oben hin überragt. In diese über der Kugellaufschale angeordnete Befestigungsplatte ist ein Kugellaufring für den Kugelkranz 18 eingepreßt. Zur axialen Sicherung der Kugellaufschale 17 an der Befestigungsplatte 26 ist mit dieser ein Lagerkragen 27 beispielsweise durch an der Befestigungsplatte 26 angeformten Niethülsen 28 fest verbunden.

Das Unterende des Lagerkragens untergreift zur Bildung des Kugelkranzes 19 den diesem zugehörigen Laufring der Kugellaufschale 17. Durch die beiden Kugelkränze sind die Kugellaufschale 17 und die Befestigungsplatte 26 gegeneinander drehbar, jedoch in axialer Richtung aneinander festgelegt.

Im unteren Bereich des Vierkantabschnittes 25 weist dieser bei dem aus den Fig. 1 und 3 ersichtlichen Ausführungsbeispiel einen durch Ausprägungen gebildeten Anschlag 29 auf, an welchem ein von einer Druckfeder beaufschlagtes, als Scheibe ausgebildetes Sperrglied 31 anliegt. Dieses Sperrglied 31 kann bei in Bremsstellung überführtem Stellbolzen 16 in die Formschlußplatte 22 eingreifen und verhindert bei Andrucklage der Bremsschwinge 12 am Laufrad auch eine Schwenkbewegung der Radgabel 10 gegenüber der Befestigungsplatte 26.

Die Bremsschwinge 12 ist mit ihrem horizontal verlaufenden Befestigungsabschnitt 13 auf eine aus dem Gabelrücken 11 nach unten austretende Zunge 32 aufgesteckt und weist zu diesem Zweck eine dem Querschnitt der Zunge entsprechende Ausnehmung auf. Diese Zunge 32 läßt sich am Gabelrücken 11 leicht bilden, indem der sich zwischen zwei Einschnitten 33 befindende Blechabschnitt rechtwinklig nach unten abgebogen ist. Zur Halterung der Bremsschwinge 12 an der Zunge 32 ist auf diese Zunge ein Klemmglied 34 aufgesteckt, das bei den dargestellten Ausführungsbeispielen aus einer Blattfeder mit im ungespannten Zustand konvexer Krümmung besteht, die einen die Zunge 32 straff umschließenden Ausschnitt 35 aufweist, welcher bei der aus Fig. 1 ersichtlichen Andrucklage fest an der Zunge 32 verklemmt und die Bremsschwinge 12 festlegt. Das Klemmglied 34 weist beiderseits Stützfinger 36 auf, die den Neigungsabschnitt 14 beiderseits einer diesen versteifenden Sicke abstützen und die Federvorspannung der Bremsschwinge 12 erhöht.

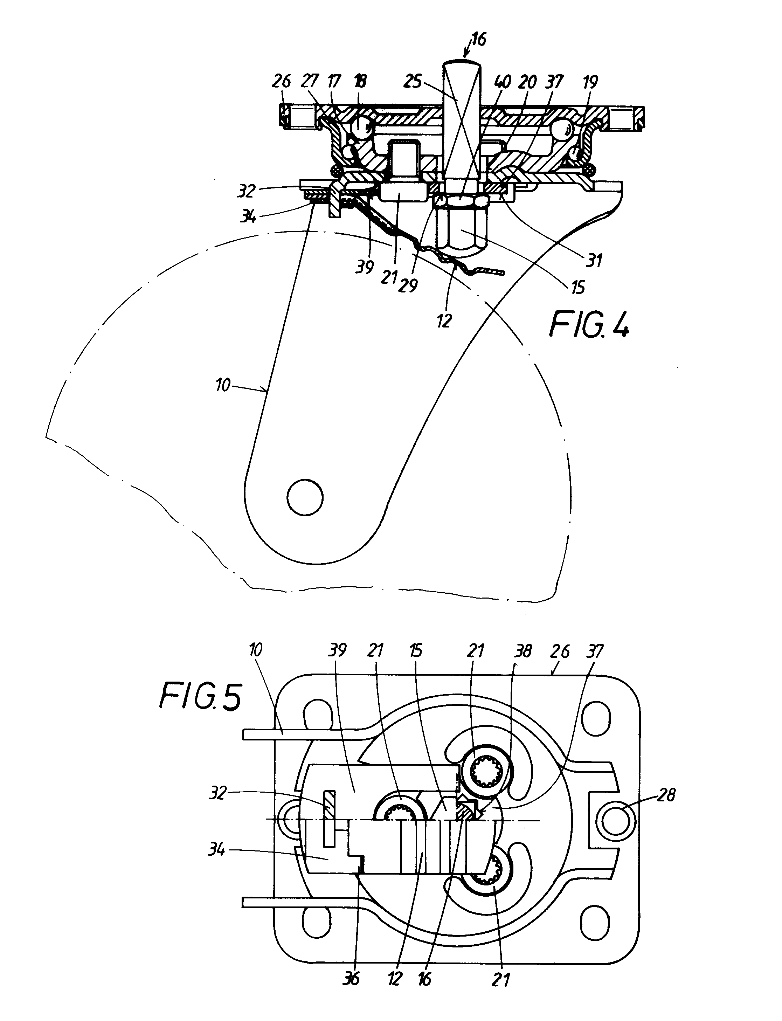

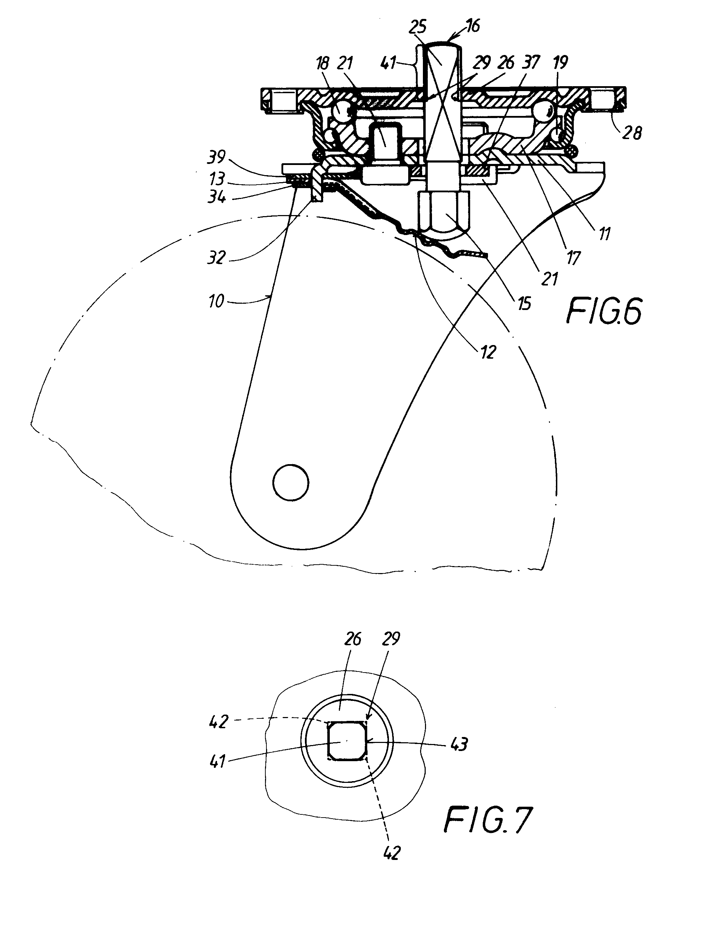

Bei den aus den Fig. 4 und 6 ersichtlichen Ausführungsbeispielen besteht das Sperrglied 31 zwar ebenfalls aus einer Sperrscheibe 37, die jedoch eine mehreckige zentrale Ausnehmung 38 (Fig. 5) aufweist, die passend zur drehfesten Verbindung mit dem Vierkantabschnitt 25 des Stellbolzens 16 gestaltet ist. Diese Sperrscheibe 37 ist unterhalb des Gabelrückens 11 an diesem drehfest, aber axial verschiebbar, gehalten, indem die Sperrscheibe 37 an ihrem Umfang Einbuchtungen zur Abstützung an den Köpfen der Befestigungsschrauben 21 für die Verbindung der Radgabel 10 mit der Kugellaufschale 17 aufweist. Die Sperrscheibe 37 ist über eine Federlasche 39 in axialer Richtung elastisch abgestützt und an der Unterseite des Radgabelrückens 11 in Anlage gehalten. Dabei ist die Federlasche 39 in der gleichen Weise am Gabelrücken 11 festgelegt, wie auch die Bremsschwinge 12. Dies bedeutet, daß zwischen der Bremsschwinge 12 und dem Gabelrücken 11 die Federlasche 39 auf die Zunge 32 des Gabelrückens 11 aufgesteckt ist und zum Schluß sowohl die Federlasche 39 als auch die Bremsschwinge 12 vom Klemmglied 34 an der Zunge 32 gehalten sind. Bei dem aus den Fig. 4 und 5 ersichtlichen Ausführungsbeispiel ist unterhalb des Sperrgliedes 31 am Stellbolzen 16 eine als Anschlag 29 fungierende Mutter 40 festgelegt, durch welche der von der Eigenfederung der Bremsschwinge 12 verursachte Lösehub des Stellbolzens 16 nach oben hin begrenzt wird. Durch diese Lösung läßt sich die bei dem Ausführungsbeispiel gemäß Fig. 1 verwendete Druckfeder 30 einsparen. Die übrigen, bei dem zuletztbeschriebenen Ausführungsbeispiel gemäß Fig. 4 und 5 nicht näher erwähnten Bauteile entsprechen denjenigen, des aus den Fig. 1 bis 3 ersichtlichen Ausführungsbeispieles.

Das aus den Fig. 6 und 7 ersichtliche Ausführungsbeispiel entspricht im wesentlichen dem Ausführungsbeispiel, das in den Fig. 4 und 5 dargestellt ist. Unterschiedlich dazu ist jedoch die Lage des Anschlages 29 zur Begrenzung des Lösehubes des Stellbolzens 16. Dieser Anschlag 29 liegt bei dem aus den Fig. 6 und 7 ersichtlichen Ausführungsbeispiel nicht unterhalb des Radgabelrückens, sondern darüber, und zwar so weit, daß der Anschlag 29 unter der Befestigungsplatte 26 liegt und in Löselage an der Unterseite dieser Befestigungsplatte 26 anliegt. Dieser Anschlag 29 wird gebildet, indem ein oberer Teilbereich 41 des Vierkantabschnittes 25 auf einen Durchmesser geringfügig unterhalb des Eckenmaßes des Vierkantabschnittes 25 abgedreht wird, so daß an der Übergangsstelle zwischen dem abgedrehten Teilbereich 41 und dem darunterliegenden Vierkantabschnitt 25 Eckvorsprünge 42 gebildet werden, die sich bei Löselage des Stellbolzens 16 an der Unterseite der Befestigungsplatte 26 anlegen, da die dem Durchtritt des Teilbereiches 41 vom Stellbolzen 16 dienende Ausnehmung 43 mit dem Querschnitt des Teilbereiches 41 des Stellbolzens 16 übereinstimmt.

Wie bereits erwähnt, geben die dargestellten und vorbeschiebenen Ausführungen den Erfindungsgegenstand nur beispielsweise wieder, der keinesfalls allein darauf beschränkt ist. Es sind vielmehr noch mancherlei Änderungen und andere Ausgestaltungen der Erfindung denkbar. Außerdem sind alle in der Beschreibung erwähnten und/oder in der Zeichnung dargestellten Merkmale erfindungswesentlich, auch wenn sie in den Ansprüchen nicht ausdrücklich beansprucht sind.

**Bezugszeichenliste:**

| | |
|---|---|
| 10 | Radgabel |
| 11 | Gabelrücken |
| 12 | Bremsschwinge |
| 13 | Befestigungsabschnitt, von 12 |
| 14 | Neigungsabschnitt, von 12 |
| 15 | Hutmutter |
| 16 | Stellbolzen |
| 27 | Kugellaufschale |
| 18 | Kugelkranz |
| 19 | Kugelkranz |
| 20 | Durchgangsbohrung |
| 21 | Befestigungsschraube |
| 22 | Formschlußplatte |
| 23 | Führungshaube |
| 24 | Führungskragen |
| 25 | Vierkantabschnitt |
| 26 | Befestigungsplatte |
| 27 | Lagerkragen |
| 28 | Niethülse |
| 29 | Anschlag |
| 30 | Druckfeder |
| 31 | Sperrglied |
| 32 | Zunge |
| 33 | Einschnitt |
| 34 | Klemmglied |
| 35 | Ausschnitt |
| 36 | Stützfinger |
| 37 | Sperrscheibe |
| 38 | Ausnehmung |
| 39 | Federlasche |
| 40 | Mutter |
| 41 | Teilbereich, von 25 |
| 42 | Eckvorsprung |
| 43 | Ausnehmung |

**Patentansprüche**

1. Feststellbare Lenkrolle für verfahrbare Geräte, mit einer das Laufrad lagernden Radgabel, deren Gabelrücken über eine Kugellaufschale und Kugelkränze an einem mit dem Gerät verbindbaren Schwenklagerkopf abgestützt ist, wobei der Gabelrücken, die Kugellaufschale und der Schwenklagerkopf zentral von einem axial verschiebbaren, im Lösesinne federbeaufschlagten Stellbolzen zur Sperrung und Freigabe einer Bremsschwinge des Laufrades sowie zur Sperrung und Freigabe eines Sperrgliedes für die Schwenkbewegung der Radgabel durchsetzt ist,

**dadurch gekennzeichnet,**

daß am Gabelrücken (11) eine etwa zur Achse des Laufrades weisende Zunge (32) angeordnet ist, auf welche die am Stellbolzen (16) anliegende, aus einer Federlasche gebildete Bremsschwinge (12) aufgesteckt und von einem ebenfalls auf die Zunge (32) aufgesteckten Klemmglied (34) in Befestigungslage gehalten ist.

2. Lenkrolle nach Anspruch 1, dadurch gekennzeichnet, daß die Zunge (32) einstückiger Bestandteil des Gabelrückens (11) ist und durch eine zwischen zwei Einschnitten (33) angeordnete, im rechten Winkel nach unten Weisende Abwinklung gebildet ist.

3. Lenkrolle nach Anspruch 1 und/oder 2, dadurch gekennzeichnet, daß das Klemmglied (34) aus einer Blattfeder mit im ungespannten Zustand konvexer Krümmung besteht, die einen die Zunge (32) straff umschließenden Ausschnitt (35) aufweist.

4. Lenkrolle nach Anspruch 3, dadurch gekennzeichnet, daß das Klemmglied (34) mit die Bremsschwinge (12) zu Beginn ihres sich an den horizontalen Befestigungsabschnitt (13) anschließenden Neigungsabschnitt (14) bereichsweise übergreifenden Stützfingern (36) versehen ist.

5. Lenkrolle nach einem oder mehreren der vorhergehenden Ansprüche, dadurch gekennzeichnet, daß das Sperrglied (31) für die Schwenkbewegung der Radgabel (10) unterhalb des Gabelrückens (11) angeordnet ist und von einer an der Zunge (32) des Gabelrückens (11) mit angeklemmten Federlasche (39) in Anlage am Gabelrücken (11) gehalten ist.

6. Lenkrolle nach Anspruch 5, dadurch gekennzeichnet, daß das als Sperrscheibe (37) ausgebildete Sperrglied (31) undrehbar, aber in axialer Richtung ausweichbar, am Gabelrücken (11) gehaltert ist und in seinem Zentrum eine mehreckige Ausnehmung (38) zur drehfesten Aufnahme eines am Stellbolzen (16) angeordneten Vierkantabschnittes (25) aufweist.

7. Lenkrolle nach Anspruch 5 und/oder 6, dadurch gekennzeichnet, daß der Lösehub des Stellbolzens (16) durch ein unterhalb des Sperrgliedes (31) am Stellbolzen (16) festgelegtes Anschlagglied (29) begrenzt ist, das sich bei Löselage am Sperrglied (31) anlegt.

8. Lenkrolle nach Anspruch 7, dadurch gekennzeichnet, daß an Anschlagglied (29) eine am Stellbolzen (16) aufgeschraubte Mutter (40) Verwendung findet.

9. Lenkrolle nach Anspruch 5 und/oder 6, dadurch gekennzeichnet, daß der Lösehub des Stellbolzens (16) durch einen unterhalb einer Befestigungsplatte (26) des Schwenklagerkopfes am Stellbolzen (16) angeordneten Anschlag (29) begrenzt ist, der sich bei Löselage an der Befestigungsplatte (26) anlegt.

10. Lenkrolle nach Anspruch 9, dadurch gekennzeichnet, daß der Anschlag (29) aus durch Abdrehen des oberen Teilbereiches (41) des Vierkantabschnitts (25) gebildeten Eckvorsprüngen (42) besteht, die sich unterhalb der auf den abgedrehten Teilbereich (41) des Vierkantabschnitts (25) passenden Ausnehmung (43) der Befestigungsplatte (26) in Löselage anlegen.

FIG. 2

FIG. 1

FIG. 3

26  27  17  18          25          40  20  37      19

32

34

39  21  29                           31

12                                    15

*FIG. 4*

10

*FIG. 5*

10      39  21  15      21  38  26  37

32                                    28

34

36  12  16      21

FIG.6

FIG.7

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | DE-U-8 706 475   (ALBERT SCHULTE) <br> * Seite 6, Zeile 11 - Zeile 14; Abbildung 1 * * <br> − − − | 1,3 | B 60 B 33/02 |
| Y | GB-A-533 201   (TINNERMAN) <br> * Seite 3, Zeile 86 - Seite 4, Zeile 33; Abbildungen 1-5 * * <br> − − − | 1,3 | |
| A | DE-A-1 605 465   (HAPPE) <br> * Seite 9, Zeile 23 - Seite 10, Zeile 7; Abbildung 1 * * <br> − − − | 1,6 | |
| P,A | EP-A-0 388 652   (ALBERT SCHULTE) <br> * Spalte 3, Zeile 12 - Zeile 32; Abbildung 1 * * <br> − − − − − | 1 | |

**RECHERCHIERTE SACHGEBIETE (Int. Cl.5)**

B 60 B
F 16 B

Der vorliegende Recherchenbericht wurde für alle Patentansprüche erstellt

| Recherchenort | Abschlußdatum der Recherche | Prüfer |
|---|---|---|
| Den Haag | 20 Dezember 91 | AYITER I. |